# EUROPÄISCHE PATENTSCHRIFT

(11) **EP 1 640 301 B1**
(45) Veröffentlichungstag und Bekanntmachung des Hinweises auf die Patenterteilung: **01.06.2011**
(21) Anmeldenummer: 05108137.0
(22) Anmeldetag: 06.09.2005
(51) Int. Cl.: B65H 19/10, C09J 7/04

(54) **Klebeband zur Herstellung einer Verbindung beim fliegenden Rollenwechsel mit einem spaltbaren System**
Adhesive tape for flying splicing with a cleavable system while changing the web roll.
Ruban adhésif pour la réalisation d'un raccordement à la volée avec un système clivable pendant le changement d'un rouleau.

(30) Priorität: 23.09.2004 DE 102004046499
(43) Veröffentlichungstag der Anmeldung: 29.03.2006
(73) Patentinhaber: TESA SE, 20253 Hamburg (DE)
(72) Erfinder: Burmeister, Axel, 21244 Buchholz (DE); Nagel, Christoph, 22417 Hamburg (DE); Götz, Kerstin, 22547 Hamburg (DE)
(74) Vertreter: Stubbe, Andreas

(56) Entgegenhaltungen:
- EP-A- 0 941 954
- WO-A-03/018451
- WO-A-03/018452
- WO-A-03/018453
- WO-A-03/018454
- DE-A1- 19 902 179
- US-A1- 2003 190 445

## Beschreibung

Die Erfindung betrifft ein Klebeband zur Herstellung einer Verbindung zwischen zwei flachen, zu Rollen gewickelten bahnförmigen Materialien bei einem fliegenden Rollenwechsel mit einer Selbstklebemasse und mit einem spaltbaren System.

Flache, bahnförmige Materialien, insbesondere Papier, werden zu Rollen aufgewickelt, um beispielsweise einer papierverarbeitenden Maschine oder einer Druck- bzw. Verpackungsmaschine zugeführt zu werden. Um einen Dauerbetrieb der Anlage zu ermöglichen, ist es notwendig, dass sobald eine erste Rolle des flachen, bahnförmigen Materials aufgebraucht ist, an das Ende dieser Materialbahn im fliegenden Wechsel den Beginn einer weiteren Materialbahn, die von einer neuen, vollen Rollen abgewickelt wird, anzusetzen und in geeigneter Weise zu verbinden. Dieser Vorgang wird als Spleißen (engl.: "to splice") bezeichnet. Hierfür werden vor allem in der Papierindustrie Klebebänder verwendet, die im Wesentlichen aus einer Trägerschicht bestehen, die jeweils an ihrer Ober-und/oder Unterseite mit einer Selbstklebemasse versehen ist, um derart eine Klebeverbindung zwischen dem Ende der alten Materialbahn und dem Anfang der neuen Materialbahn herzustellen.

Hierzu sind dem Fachmann verschiedene ein- oder doppelseitige Klebebänder bekannt, die in der Regel manuell am Bahnanfang verklebt werden. Dabei muss auf eine exakte Ausführung der Verklebung geachtet werden, um ein Abreißen des bahnförmigen Materials zu vermeiden, das zu unerwünschten und kostenintensiven Maschinenstillstandzeiten führen würde, um eine Materialbahn erneut in die weiterverarbeitende Maschine einzuführen.

Die DE 196 32 689 A1 beschreibt ein Klebeband mit einem spaltbaren Papierträger, der über die gesamte Breite des Klebebands aufgespaltet wird. Das Klebeband umfasst einen Papierträger, der beidseitig mit einer Selbstklebemasse beschichtet ist. Das Klebeband wird hierbei unter die äußere Lage einer neuen Rolle geklebt, wobei im Wesentlichen die Hälfte der Selbstklebemasse zur Befestigung des Bahnendes der alten Materialbahn frei bleibt. Durch das Einziehen der Materialbahn in die weiterverarbeitende Maschine wird der Papierträger aufgespaltet und deckt derart die Selbstklebemassen in nicht klebender Weise ab, um ein Ankleben an unerwünschten Oberflächen zu vermeiden.

Die DE 198 30 673 A1 offenbart ein Klebeband für den fliegenden Rollenwechsel in Papierveredelungsmaschinen oder dergleichen mit einem Papierträger und einer wasserlöslichen Selbstklebemasse, wobei der Papierträger beidseitig mit einer wasserlöslichen Selbstklebemasse beschichtet ist, und ein Randbereich der Rückseite des Klebebandes mit einem einseitig klebenden Klebeband ausgerüstet ist, welches seinerseits einen spleißfreudigen Papierträger aufweist, der wiederum mit wasserlöslicher Selbstklebemasse ausgerüstet ist.

EP 0 941 954 A1 offenbart ein Klebeband zur Herstellung einer Verbindung zwischen zwei flachen, zu Rollen gewickelten bahnförmigen Materialien mit einer Selbstklebemasse und mit einem spaltbaren System zweier voneinander trennbarer Schichten.

US 2003/190445 offenbart ein Klebeband für den fliegenden Rollenwechsel von auf Rollen aufgewickeltem Flachbahnmaterial, mit klebender Vorderseite und nichtklebender Rückseite sowie zwei Längskanten mit einem Hauptträger, der einseitig an der Vorderseite mit einer Selbstklebemasse beschichtet ist, wobei nur ein Teil der nichtklebenden Rückseite mit mindestens einem selbstklebenden System ausgerüstet ist, dadurch gekennzeichnet, dass der Hauptträger zumindest im Bereich des selbstklebenden Systems aus spaltbarem Material besteht.

Die DE 198 41 609 A1 beschreibt ein aus einem Basis- und einem Deckelement bestehendes Haftelement. Das Basiselement spaltet sich bei Normalkraftbeanspruchung, d. h. im Wesentlichen senkrecht zur Hauptebene des Haftelements, in eine Ober- und eine Unterseite auf. Zwischen Ober- und Unterseite sind eine Vielzahl an Klebeschichtelementen angeordnet, die nach dem Auftrennen der Verbindung durch das abgetrennte Material des Basiselements abgedeckt sind. Die Klebeschichtelemente sind punktförmig ausgebildet und reißen beim Auftrennen Fasern aus einem über der Klebeschicht liegenden Papierträger aus.

Die DE 199 02 179 A1 offenbart ein Klebeband für ein Spleißverfahren. Das Klebeband ist an seiner nicht klebenden Rückseite mit einem doppelseitigen Klebeband mit einem spaltbaren Papierträger versehen, wobei das doppelseitige Klebeband beim Spleißverfahren aufgespalten wird, um die Selbstklebeschichten abzudecken. Das zusätzliche Klebeband ist eingerückt angeordnet, das bedeutet, dass das zusätzliche Klebeband schmaler ist als das darüber liegende Klebeband bzw. von diesem überlappt wird.

Als nachteilig hierbei ist jedoch anzusehen, dass beim Spalten einer Trägerschicht, die üblicherweise aus Papier besteht, von der Selbstklebemasse Fasern aus dieser Papierschicht herausgerissen werden. Da diese Fasern in der Papierschicht statistisch verteilt angeordnet sind treten Streuungen in der Dichte der Papierfasern auf, so dass es zu lokalen Unterschieden in dem Weiterreißwiderstand bzw. der Widerstandsfähigkeit des Papierträgers kommt. Des Weiteren kann der Papierträger, in Abhängigkeit der gewählten Selbstklebemasse, von dieser durchtränkt oder "durchfettet" werden. Das bedeutet, dass Bestandteile der Klebemasse in den Papierträger wandern können und somit seine Eigenschaften, insbesondere sein Weiterreißwiderstand, in unerwünschter Weise verändert wird. Besonders bei Klebebändern, die in ihrem Schichtaufbau eine Metallfolie aufweisen, tritt ein derartigen Verblocken des Spaltmaterials auf, da die Metallschicht nicht von der Selbstklebemasse durchdrungen und somit der Papierträger verstärkt von Bestandteilen der Klebemasse durchwandert werden kann.

Zwar sind auch spaltbare Systeme bekannt, die aus einem Verbund aus Papier- und Folienträger oder aus einem Verbund aus zwei Folien aufgebaut sind, wobei der Verbund aus definiert punkt- und/oder linienförmig verbundenen Papieren und/oder Folien bestehen kann. Zum Aufspalten wird dieser Verbund voneinander getrennt. Hierbei ist jedoch als nachteilig anzusehen, dass die Gesamtdicke des jeweiligen Klebebands bestehend aus Selbstklebemassen auf der Ober- und Unterseite des Klebebands, sowie ein Papier- oder Folienträger sowie ein spaltbares System üblicherweise 200 µm und mehr beträgt. Somit ist an der Verbindungsstelle zwischen zwei bahnförmigen Materialien eine unerwünschte Materialverdickung gegeben.

Ausgehend von diesem Stand der Technik ist der Fachmann vor die Aufgabe gestellt, ein Klebeband anzugeben mit dem ein fliegender Rollenwechsel zuverlässig durchführbar ist, wobei das Aufspalten eines spaltbaren Systems im Klebeband mit definiertem Weiterreißwiderstand gewährleistet ist.

Diese Aufgabe wird durch die im Anspruch 1 angegebenen Merkmale gelöst. Vorteilhafte Ausgestaltungen der Erfindung sind in den Unteransprüchen gekennzeichnet.

Der Kerngedanke der Erfindung besteht darin, dass der Spaltvorgang des spaltbaren Systems zwischen zwei voneinander trennbaren Schichten stattfindet und nicht innerhalb einer Schicht. Somit werden beispielsweise aus einem Papierträger keine Fasern herausgerissen und die notwendige Kraft zum Trennen der Schichten kann exakt definiert werden. Ebenso tritt durch eine längere Lagerung des Klebebands keine wesentliche Änderung der zum Trennen der Schichten notwendigen Kräfte auf. Die Art der Verbindung der beiden Schichten kann in beliebiger Weise oder bevorzugt wie im Folgenden beschrieben ausgeführt sein. Bevorzugt wird ein spaltbares System verwendet, das einen deutlich geringen Weiterreißwiderstand aufweist als ein Träger oder eine Trägerschicht, die die eigentlichen Zugkräfte in der Hauptebene des Klebebands aufnimmt, um die beiden Materialbahnen miteinander zu verbinden. Somit wird das System aufgespalten bevor ein Träger zerstört wird. Das spaltbare System besteht hierbei aus zumindest zwei Schichten, die sich unter einer definierten Krafteinwirkung, die beim fliegenden Rollenwechsel überschritten wird, voneinander trennen.

Üblicherweise wird das Klebeband rechtwinklig zur Längserstreckung des bahnförmigen Materials verklebt, es kann aber auch im spitzen Winkel von bis zu 30° zur laufenden Bahn, insbesondere bis zu 10°, verklebt werden.

Der Vorteil der Erfindung besteht darin, dass die notwendige Kraft zum Trennen oder Spalten des spaltbaren Systems stets konstant bleibt, so dass ein fliegender Rollenwechsel unter kontrollierten Bedingungen ausführbar ist und eine Fehlfunktion des Klebebands vermieden wird.

Die beiden Schichten haften aufgrund von Adhäsionskräften aneinander. Hierbei können die beiden Schichten aus an sich beliebigen Materialien bestehen, wobei aufgrund der jeweiligen Materialeigenschaften unterschiedlich starke Adhäsionskräfte zwischen den Schichten wirken. Es ist dem Fachmann möglich, geeignete Materialien auszuwählen, um zwischen den Schichten eine definierte Adhäsionskraft zu erhalten. Wird das Klebeband in Normalrichtung, d. h. im Wesentlichen senkrecht zur Hauptebene des Klebebands, mit einer Kraft beaufschlagt trennen sich die beiden Schichten voneinander, sobald diese Kraft größer ist als die Adhäsionskraft. Nach dem Spalten bedeckt jeweils eine der Schichten die Selbstklebemassen, so dass diese in nicht klebender Weise abgedeckt sind. Dadurch ist gewährleistet, dass die beiden Schichten mit definierter und zeitlich konstanter Kraft voneinander getrennt werden können. Da die beiden Schichten aufgrund von Adhäsionskräften aneinander haften kann auf eine zusätzliche Klebeschicht verzichtet und somit die Gesamtdicke des Klebebands verringert werden.

In bevorzugter Weise beträgt der Weiterreißwiderstand des Systems, wie im Anspruch 2 angegeben, zwischen 5 und 70cN/cm, insbesondere zwischen 12 und 60cN/cm. Mit diesen Werten für den Weiterreißwiderstand ist gewährleistet, dass das Klebeband nicht bereits vor Gebrauch aufgespalten wird und mit dem Klebeband beispielsweise Papierbahnen zuverlässig miteinander verklebt und somit endlos einer weiterverarbeitenden Maschinen zugeführt werden können. Entsprechende Verfahren zur Messung dieses Weiterreißwiderstandes sind dem Fachmann bekannt.

Eine der Schichten ist mit einem detektierbaren Merkmal versehen. Hierbei erfolgt die Detektion der Schicht vorzugsweise optisch und/oder elektromagnetisch. Beispielsweise kann eine der Schichten mit einem optisch erkennbaren Muster versehen sein, das mit Hilfe geeigneter Sensoren beim Durchlauf durch die Maschine feststellbar ist. In gleicher Weise kann eine der Schichten ein elektromagnetisch detektierbares Merkmal enthalten, beispielsweise eine Metallisierung, die mit Hilfe eines elektromagnetischen Sensors feststellbar ist. Aufgrund der Detektierbarkeit zumindest einer der Schichten wird beispielsweise beim Beschleunigen einer Papierrolle, die mit einem derartigen Klebeband versehen ist, das Klebeband detektiert und somit der Splice- oder Verbindungsvorgang mit dem Bahnende der alten Rolle zum richtigen Zeitpunkt ausgelöst. Des Weiteren kann bei der Weiterverarbeitung der Papierbahn in einer sogenannten Makulaturweiche das Klebeband detektiert werden, um diesen Abschnitt mit der Spliceverbindung auszusondern. Somit übernimmt das Klebeband die Funktion bisher zusätzlich aufgebrachter Etiketten oder Markierungen, die im Stand der Technik manuell an einer Rolle eines bahnförmigen Materials angebracht wurden, was häufig zu Fehlfunktionen führte, da das Etikett an einer falschen Stelle angebracht wurde. Somit ist gewährleistet, dass aufgrund der Detektierbarkeit des Klebebands die genaue Position der Verklebung automatisch feststellbar ist und das Abschneiden bzw. Aussondern dieser Verbindung stets an der richtigen Stelle selbsttätig erfolgen kann. Mit diesem detektierbaren Klebeband ist es auch möglich, aufgrund der Rotationsgeschwindigkeit der Rolle Informationen über den Prozessablauf zu erhalten, da aus der Bewegung des Klebebands beispielsweise unmittelbar auf die Transportgeschwindigkeit der Bahn geschlossen werden kann.

In einfacher Weise ist die detektierbare Schicht eine Metallfolie, insbesondere Aluminium. Beispielsweise verfügt eine Alu miniumfolie über eine Dicke von 12µm. Ebenso ist es möglich, dass die detektierbare Schicht eine Papierfolie ist, die mit einer Metallisierung bzw. metallischen Anteilen versehen ist. Ist eine der Schichten eine Metallfolie wird die andere Schicht bevorzugt in Form einer Acrylatdispersion, PMMA, Latex, PVA, PVC bzw. als Copolymer dieser Stoffe ausgeführt. Mit diesen Stoffkombinationen können die vorstehend genannten Weiterreißwiderstände in gewünschter Weise definiert eingestellt werden. Dabei treten auch bei längerer Lagerung des Klebebands keine Veränderungen dieser Festigkeitswerte auf, da die Adhäsionskräfte zwischen diesen Materialien unverändert bleiben. Es versteht sich, dass sowohl die Metallfolie als auch die weitere Schicht jeweils an ihren Außenseiten mit einer Selbstklebemasse versehen sind. Diese Selbstklebemasse ist vorzugsweise eine wasserlösliche oder wasserunlösliche Acrylat-Selbstklebemasse. In gleicher Weise können Natur- und Synthesekautschukmassen als auch Dispersionen der vorstehend beschriebenen Verbindungen verwendet werden. Zusätzlich können die Selbstklebemassen mit Abdeckelementen, z. B. in Form silikonisiertem Trennpapiers, versehen sein, um das Klebeband handhaben zu können.

Die detektierbare Schicht kann ihrerseits auf einen Träger aufgebracht sein. Dabei ist die detektierbare Schicht auf einer Seite des Trägers angeordnet und die zugehörige Selbstklebemasse auf der anderen Seite des Trägers. Der Träger kann aus Papier oder einer Folie bestehen. Der Träger kann unter anderem ein glattes, weißes, gebleichtes Kraftpapier sein.

Eine der beiden voneinander trennbaren Schichten kann die andere überlaffen. Beispielsweise kann die nicht detektierbare Schicht gegenüber der detektierbaren Schicht eingerückt ausgeführt sein. Das bedeutet, dass die detektierbare Schicht in der Breite des Klebebands gesehen breiter ist als die nicht detektierbare. Beispielsweise kann im Bereich der vorderen Längskante in Bewegungsrichtung des Klebebands gesehen die nicht detektierbare Schicht bis zu 15mm gegenüber der detektierbaren Schicht eingerückt sein, insbesondere 0,5 bis 15mm, noch vorteilhafter 1 bis 7mm und in besonders vorteilhafter Weise 1,5 bis 3,5mm. Ebenso ist es möglich, dass eine der beiden Schichten, vorzugsweise die nicht detektierbare, mehrteilig ausgeführt ist. Das bedeutet, dass die Schicht in mehreren voneinander beabstandet angeordneten Segmenten oder Abschnitten ausgeführt ist, wobei diese Abschnitte, in der Breite des Klebebands gesehen, vorzugsweise parallel zueinander verlaufen und einen Abstand zwischen 3 und 50mm, insbesondere zwischen 25 und 45mm und besonders vorteilhaft zwischen 30 und 40mm voneinander aufweisen.

In gleicher Weise ist es möglich, dass bei den trennbaren Schichten die jeweils einer Schicht zugeordnete Selbstklebemasse gegenüber dieser Schicht ebenfalls eingerückt bzw. in verringerter Breite auf diese Schicht aufgebracht ist. Beispielsweise kann die Selbstklebemasse zur Vorderkante der Schicht bis zu 15mm eingerückt sein, insbesondere 0,5 bis 15mm, bevorzugt 1 bis 7mm und sehr bevorzugt zwischen 1,5 und 3,5mm.

Ist eine der Schichten aus mehreren Abschnitten zusammengesetzt können diese Abschnitte entweder aus dem gleichen Material mit den gleichen Weiterreißwiderständen aufgebaut sein oder aus unterschiedlichen Materialien mit gegebenenfalls unterschiedlichen Breiten, um definierte Weiterreißwiderstände zu erhalten.

Zusätzlich kann an der detektierbaren Schicht ein weiteres nicht spaltbares System vorgesehen sein, das z. B. auf eine äußere Lage des auf einer Rolle aufgewickelten bahnförmigen Materials aufgeklebt wird. Mit dem System wird dann diese Lage von der Rolle abgezogen.

Drei Ausführungsbeispiele der Erfindung werden nachstehend anhand der Zeichnungen näher erläutert. Es zeigen:
- Fig. 1:: ein erstes Klebeband im Querschnitt,
- Fig. 2:: ein zweites Klebeband im Querschnitt, und
- Fig. 3:: ein drittes Klebeband im Querschnitt

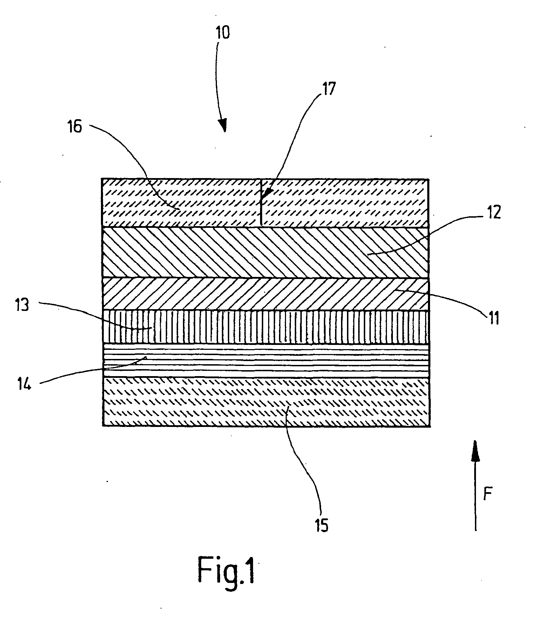

Bei dem in Figur 1 dargestellten Klebeband 10 handelt es sich um ein Klebeband mit einem Träger 11, beispielsweise einem Papierträger. Auf der Oberseite des Trägers 11 ist eine Selbstklebemasse 12 aufgebracht, beispielsweise eine wasserlösliche Acrylat-Selbstklebemasse, die wiederum mit einem Abdeckelement 16 versehen ist, um ein Festkleben des Klebebands 10 an unerwünschten Oberflächen zu vermeiden. Das Abdeckelement 16, z. B. ein silikonisiertes Trennpapier, ist mit einem Schlitz 17 versehen, um in der Breite des Klebebands 10 gesehen jeweils die Hälfte der Selbstklebemasse 12 freizulegen. An der Unterseite des Trägers 11 ist eine detektierbare Schicht 13, im Form einer Metallfolie, angeordnet. An der detektierbaren Schicht 13 haftet über Adhäsionskräfte eine weitere davon abspaltbare Schicht 14, wobei der Weiterreißwiderstand des Klebebands 10 aufgrund der zwischen den Schichten 13, 14 wirkenden Adhäsionskräfte exakt definierbar ist. An der Unterseite der Schicht 14 ist ebenfalls eine Selbstklebemasse 15 angeordnet.

Zum Verbinden zweier bahnförmiger Materialien wird zuerst das Klebeband 10 unter die äußere Lage einer neuen Rolle des bahnförmigen Materials geklebt und nachfolgend wird der eine Teil des geschlitzten Abdeckelements 16 abgezogen und der Bahnanfang der neuen Rolle auf dem nun freigelegten Teil der Selbstklebemasse 12 verklebt. Anschließend wird der zweite Teil des Abdeckelements 16 abgezogen und das Klebeband 10 bzw. der nun freiliegende Teil der Selbstklebemasse 12 mit dem Ende der alten Rolle des bahnförmigen Materials verklebt. Durch das Einziehen des bahnförmigen Materials beispielsweise in eine papierverarbeitende Maschine wirken auf das Klebeband 10 Kräfte in normaler Richtung, d. h. im Wesentlichen senkrecht zur Hauptebene des Klebebands 10 wie durch den Pfeil F verdeutlicht. Sobald diese Kräfte die Adhäsionskräfte zwischen den Schichten 13, 14 übersteigen wird das Klebeband 10 definiert aufgespaltet, wobei die Schicht 14 die Selbstklebemasse 15 in nicht klebender Weise überdeckt.

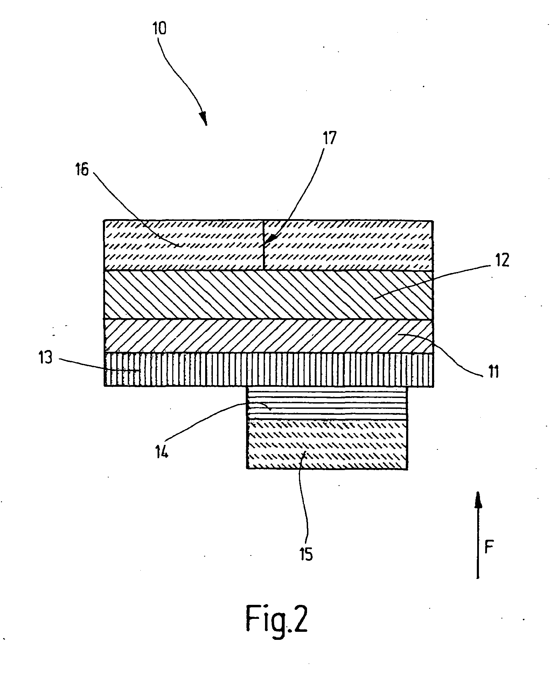

Bei dem Ausführungsbeispiel in Figur 2 ist der Aufbau des Klebebands 10 im Wesentlichen derselbe. Lediglich die Schicht 14, die von der detektierbaren Schicht 13 abgespalten wird, ist hier gegenüber der Schicht 13 eingerückt ausgeführt, wobei in der Ebene des Klebebands 10 gesehen die Abstände der Schicht 14 zu den Längskanten des Klebebands 10 in vorstehend beschriebener Weise gewählt werden können, um gewünschte Weiterreißwiderstände des Klebebands 10 zu erhalten. Die Selbstklebemasse 15 an der Unterseite der Schicht 14 ist hier vollflächig auf der Schicht 14 aufgebracht. Diese Selbstklebemasse 15 kann aber gegenüber der Schicht 14 ebenfalls eingerückt ausgeführt sein.

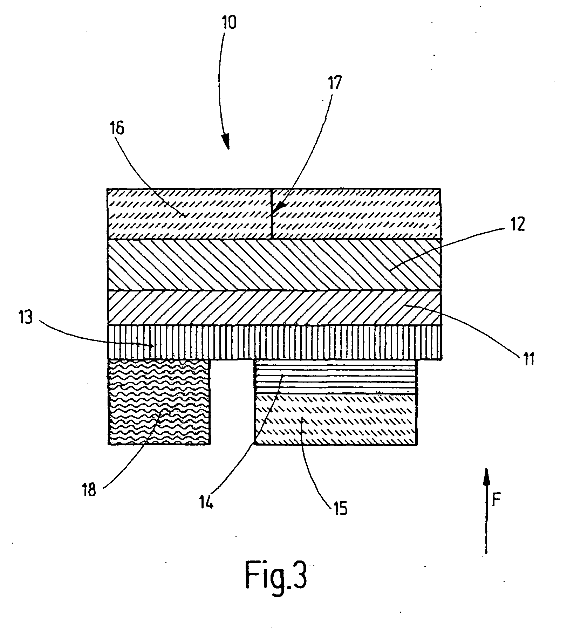

In Figur 3 ist eine weitere Ausführungsform dargestellt, bei der an der detektierbaren Schicht 13 zusätzlich ein nicht spaltbares System 18 angeordnet ist. Dabei wird das Klebeband 10 derart auf eine äußere Lage einer vollen Rolle aufgeklebt, dass das nicht spaltbare System 18 auf die äußere Lage und die Schicht 14 bzw. deren Selbstklebemasse 15 auf die darunter liegende zweitäußere Lage aufgeklebt wird. In diesem Fall wird die Selbstklebemasse 12 vollflächig mit dem Bahnende der alten Bahn verklebt. Beim Transport der Bahn wird das spaltbare System 13, 14 durch Kräfte in Normalrichtung aufgespalten und somit die äußere Lage durch das nicht spaltbare System 18 von der Rolle abgezogen.

Es versteht sich, dass die Maßstabsverhältnisse in den Figuren 1 bis 3 nicht real sind, d. h. dass die relativen Dicken der einzelnen Schichten von der zeichnerischen Darstellung abweichen können.

### BEZUGSZEICHENLISTE

- 10: Klebeband
- 11: Träger
- 12: Selbstklebemasse
- 13: detektierbare Schicht
- 14: Schicht
- 15: Selbstklebemasse
- 16: Abdeckelement
- 17: Schlitz
- 18: nicht spaltbares System
- F: Kraft

## Patentansprüche

1. Klebeband (10) zur Herstellung einer Verbindung zwischen zwei flachen, zu Rollen gewickelten bahnförmigen Materialien bei einem fliegenden Rollenwechsel mit einer Selbstklebemasse (12) und mit einem spaltbaren System, wobei
das spaltbare System zwei Schichten (13,14) aufweist,
und wobei zwischen den Schichten (13, 14) eine Adhäsionskraft wirkt und die Schichten voneinander trennbar sind, indem auf das Klebeband in Normalrichtung eine Kraft einwirkt, die größer ist als die Adhäsionskraft, **dadurch gekennzeichnet, dass** eine der zwei Schichten (13) eine detektierbare Schicht in Form einer Metallfolie ist.

2. Klebeband nach Anspruch 1, **dadurch gekennzeichnet, dass**
das spaltbare System (13, 14) einen Weiterreißwiderstand zwischen 5 und 70cN/cm, insbesondere zwischen 12 und 60cN/cm, aufweist.

3. Klebeband nach einem der vorstehenden Ansprüche, **dadurch gekennzeichnet, dass** die detektierbare Schicht (13) eine Aluminiumfolie ist.

4. Klebeband nach einem der vorstehenden Ansprüche, **dadurch gekennzeichnet, dass** die detektierbare Schicht (13) auf einem Träger (12) aufgebracht ist.

5. Klebeband nach einem der vorstehenden Ansprüche, **dadurch gekennzeichnet, dass** eine der beiden Schichten (13, 14) die andere (14, 13) überlappt.

6. Klebeband nach einem der vorstehenden Ansprüche, **dadurch gekennzeichnet, dass** eine der Schichten (13, 14) die ihr zugeordnete Selbstklebemasse (12, 15) überlappt.

7. Klebeband nach einem der Ansprüche 5 oder 6, **dadurch gekennzeichnet, dass** die Schicht (14), die von der detektierbaren Schicht (13) trennbar ist, aus unterschiedlichen Materialien zusammengesetzt ist.

8. Klebeband nach einem der Ansprüche 5 bis 7, **dadurch gekennzeichnet, dass** an der detektierbaren Schicht (13) ein nicht spaltbares System (18) angeordnet ist.

## Claims

1. Adhesive tape (10) for producing a joint during a flying reel change between two flat web materials wound up onto reels, having a self-adhesive compound (12) and having a cleavable system, the cleavable system having two layers (13, 14), and an adhesive force acting between the layers (13, 14) and it being possible to separate the layers from each other in that a force acts on the adhesive tape in the normal direction, which force is greater than the adhesive force, **characterized in that** one of the two layers (13) is a detectable layer in the form of a metal foil.

2. Adhesive tape according to Claim 1, **characterized in that** the cleavable system (13, 14) has a tear propagation resistance between 5 and 70 cN/cm, in particular between 12 and 60 cN/cm.

3. Adhesive tape according to either of the preceding claims, **characterized in that** the detectable layer (13) is an aluminium foil.

4. Adhesive tape according to one of the preceding claims, **characterized in that** the detectable layer (13) is applied to a carrier (12).

5. Adhesive tape according to one of the preceding claims, **characterized in that** one of the two layers (13, 14) overlaps the other (14, 13).

6. Adhesive tape according to one of the preceding claims, **characterized in that** one of the layers (13, 14) overlaps the self-adhesive compound (12, 15) assigned to it.

7. Adhesive tape according to either of Claims 5 and 6, **characterized in that** the layer (14) that can be separated from the detectable layer (13) is assembled from different materials.

8. Adhesive tape according to one of Claims 5 to 7, **characterized in that** a non-cleavable system (18) is arranged on the detectable layer (13).

## Revendications

1. Ruban adhésif (10) pour la fabrication d'une connexion entre deux matériaux en forme de bande plats enroulés en rouleaux lors d'un changement de rouleau à la volée avec une composition autoadhésive (12) et un système clivable,
le système clivable présentant deux couches (13, 14),
et une force d'adhésion agissant entre les couches (13, 14) et les couches pouvant être séparées l'une de l'autre, en appliquant sur le ruban adhésif dans la direction normale une force qui est supérieure à la force d'adhésion, **caractérisé en ce que** l'une des deux couches (13) est une couche détectable en forme de film métallique.

2. Ruban adhésif selon la revendication 1, **caractérisé en ce que** le système clivable (13, 14) présente une résistance à l'arrachement supplémentaire comprise entre 5 et 70 cN/cm, notamment entre 12 et 60cN/cm.

3. Ruban adhésif selon l'une quelconque des revendications précédentes, **caractérisé en ce que** la couche détectable (13) est un film d'aluminium.

4. Ruban adhésif selon l'une quelconque des revendications précédentes, **caractérisé en ce que** la couche détectable (13) est appliquée sur un support (12).

5. Ruban adhésif selon l'une quelconque des revendications précédentes, **caractérisé en ce que** l'une des deux couches (13, 14) chevauche l'autre (14, 13).

6. Ruban adhésif selon l'une quelconque des revendications précédentes, **caractérisé en ce que** l'une des couches (13, 14) chevauche la composition autoadhésive (12, 15) qui lui est associée.

7. Ruban adhésif selon l'une quelconque des revendications 5 ou 6, **caractérisé en ce que** la couche (14), qui peut être séparée de la couche détectable (13), se compose de matériaux différents.

8. Ruban adhésif selon l'une quelconque des revendications 5 à 7, **caractérisé en ce qu'**un système non clivable (18) est disposé sur la couche détectable (13).
